# EUROPEAN PATENT SPECIFICATION

(11) **EP 3 847 209 B1**
(45) Date of publication and mention of the grant of the patent: **02.09.2026**
(21) Application number: 20870476.7
(22) Date of filing: 07.10.2020
(51) Int. Cl.: B32B 7/12, B32B 27/08, B32B 27/18, B32B 27/30, B32B 27/32, C08J 7/04, C08J 7/048, C08L 23/04

(54) **MULTILAYER FILM AND IMPLEMENTATIONS THEREOF**
MEHRSCHICHTIGE FOLIE UND IMPLEMENTIERUNGEN DAVON
FILM MULTICOUCHE ET SES PROCÉDÉS DE MISE EN OEUVRE

(30) Priority: 07.10.2019 IN 201921040614
(43) Date of publication of application: 14.07.2021
(73) Proprietor: EPL Limited, Mumbai 400013 (IN)
(72) Inventor: NAIR, Hariharan Krishnan, Mumbai 400067 (IN)
(74) Representative: Regimbeau
(86) International application number: PCT/IN2020/050862
(87) International publication number: WO 2021/070197

(56) References cited:
- WO-A1-2014/184258
- WO-A1-2015/017697
- WO-A1-2015/026694
- WO-A1-2017/165004
- WO-A1-2018/042299
- WO-A1-2019/156733
- WO-A1-2021/053492
- WO-A1-2021/117052
- IN-A- 555 MU2 013
- US-A1- 2016 339 663

## Description

### TECHNICAL FIELD OF THE INVENTION

The present invention relates to a multilayer film for packaging comprising four or more layers having attributes, such as, good stiffness, resilience, and bounce back. It also relates to a process of manufacturing such a multilayer film.

### BACKGROUND OF THE INVENTION

Packaging is an essential part of a product in today's developing world. And yet, with today's environmental concern, reducing waste and energy usage while increasing product sustainability has been the priority. A major challenge faced by packaging technology advancement relates to sustainable packaging. Innovation in sustainable packaging technologies can play a vital role in transforming the world. Sustainable packaging these days is just not limited to focusing on recycling, instead other parameters, such as reducing weight and volume of the packaging, eliminating or minimizing toxic additives, and reducing energy consumption are also equally important in deciding the sustainability of packaging materials, without affecting the functionalities and feel of the packaging material.

US8709595B2 discloses a food packaging article comprising a myoglobin blooming agent selected from nitrogen heterocycles, fremy's salts, nitrate and nitrite salts.

JP5743376B2 discloses a packaging web having a coextruded unstretched metallized sealant film. US7029734B1 discloses a multilayer packaging film for aseptic package applications, wherein the multilayer packaging film includes a sealant layer comprising an olefin polymer, an oxygen barrier layer and an outer layer comprising polyester homopolymers having silicone or other hydrogen peroxide resistant exterior coating. WO 2012/160436 discloses a polymer composition comprising: at least one low density polyethylene (LDPE); at least one linear low density polyethylene (LLDPE); and a nucleating agent in an amount in the range of 1.5% to 3.0% w/w of the total weight of the composition; wherein the low density polyethylene and the linear low density polyethylene are in a ratio in the range of 1:1 to 3:1 w/w.

WO 2018/042299 discloses a recyclable package such as a Stand Up Pouch, prepared using a coextruded multilayer film, comprising a first surface layer comprising a HDPE composition, a first intermediate layer comprising LLDPE or MDPE, a second intermediate layer comprising a HDPE composition and a second surface layer comprising a sealable polyethylene composition, and an EVOH barrier layer adjoining first and second tie layers.

Most of the currently used packaging films include components such as polyvinyl dichloride, metal complexes and salts, and other synthetic chemicals that are associated with several environmental health concerns. As sustainability takes a center stage, there is a dire need in the present state of the art for a suitable packaging material which fulfills the parameters to qualify under the category of sustainable packaging.

### SUMMARY OF THE INVENTION

In an aspect of the present disclosure, there is provided a multilayer film as defined in claim 1, comprising: (a) at least one print layer (102); (b) at least one tie layer (104); (c) at least one second tie layer (108); and (d) at least one sealant layer (110), wherein the multilayer film comprises at least one polyethylene having a weight percentage in the range of 80 - 95 % with respect to the multilayer film, and a density in the range of 0.941 - 0.99 gm/cm³. Particular embodiments are defined in the dependent claims.

In another aspect of the present disclosure, there is provided a process of manufacturing the multilayer film as described herein, the process comprising: (a) extrusion laminating the at least one barrier layer, the at least one sealant layer, and the at least one second tie layer to obtain a sheet; and (b) extrusion laminating the sheet, the at least one print layer, and the at least one tie layer to obtain the multilayer film, as defined in claim 13.

These and other features, aspects and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates a cross-section of a multilayer film (100), according to an implementation of the present disclosure.
Figure 2 illustrates a cross-section of a multilayer film (200) comprising a barrier layer (106), according to an implementation of the present disclosure.
Figure 3 illustrates a cross-section of a print layer (102) of a multilayer film (300), according to an implementation of the present disclosure.
Figure 4 illustrates a cross-section of a sealant layer (110) of a multilayer film (400), according to an implementation of the present disclosure.
Figure 5 illustrates a cross-section of a multilayer film (500), according to another implementation of the present disclosure.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively and any and all combinations of any or more of such steps or features.

### Definitions

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. Throughout this specification, unless the context requires otherwise the word "comprise", and variations, such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

The phrase "at least one polyethylene" refers to any polyethylene selected from the group consisting of high density polyethylene, medium density polyethylene, low density polyethylene, linear low density polyethylene, and combinations thereof. The at least one polyethylene with the meaning of the present disclosure has a density in the range of 0.941 - 0.99 gm/cm³ and melt flow index (MFI) in a range of 0.4 to 7.0 g/10 minutes.

The term "high density polyethylene" used herein refers to a polyethylene having a density in the range of 0.941 - 0.970 gm/cm³.

The term "medium density polyethylene" used herein refers to a polyethylene having a density in the range of 0.926 - 0.941 gm/cm³.

The term "low density polyethylene" used herein refers to a polyethylene having a density in the range of 0.919 - 0.935 gm/cm³.

The term "linear low density polyethylene" used herein refers to a polyethylene having a density in the range of 0.919 - 0.925 gm/cm³.

The term "stiffness" used herein refers to the resistance of a material to deformation under an applied force.

The term "young's modulus" used herein refers to the property of a material that is calculated by measuring the ratio of stress to strain incurred in the material. Young's modulus gives a measure of the stiffness of the material or the ease with which it can be stretched or bent. Higher the value of the young's modulus, lesser is the extent to which a material can be stretched or elongated, higher is the stiffness. It is measured in terms of N/m² or Pascal (Pa).

The term "melt flow index" or "MFI" used refers to the grams of a polymer flowing per 10 minutes through a capillary tube. It is a measure of the ease of flowing of the polymer melt denoted in terms of g/10 min.

The term "density" used herein refers to the mass of polymer present per unit volume of the multilayer film. It is measured in terms of g/cm³.

The term "extrusion polyethylene" used herein refers to two polyethylene films extruded out together to form a tie layer.

Ratios, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a thickness range of about 50 µm to about 200 µm should be interpreted to include not only the explicitly recited limits of about 50 µm to about 200 µm, but also to include sub-ranges, such as 65 µm to 155 µm, 70 µm to 190 µm, and so forth, as well as individual amounts, including fractional amounts, within the specified ranges, such as 65.2 µm, 160.6 µm, and 191.3 µm, for example.

As discussed in the background section, shifting to packaging by multilayer films which are sustainable is the need of the hour. Considering the problems faced with conventionally used packaging films, the present disclosure provides a multilayer film comprising: (a) at least one print layer (102); (b) at least one tie layer (104); (c) at least one second tie layer (108); and (d) at least one sealant layer (110), wherein the multilayer film comprises at least one polyethylene having a weight percentage in the range of 80 - 95 % with respect to the multilayer film, and a density in the range of 0.941 - 0.99 gm/cm³. It is the presence of at least one polyethylene having a density in the range of 0.941 - 0.99 gm/cm³ in a high weight percentage, i.e., in the range of 80 - 95% with respect to the multilayer film, which enables source reduction, i.e., reduction of film thickness without affecting the functionalities of the multilayer film, such as, stability, stiffness and bounce back properties. The present multilayer films, even with a reduced thickness to 220 µm, do not fail to exhibit an improved young's modulus and enhanced stiffness. Moreover, the higher percentage of polyethylene having a density in the range of 0.941 - 0.99 gm/cm³ makes them a sustainable alternative to substitute the presently used packaging materials.

In an embodiment of the present disclosure, there is provided a multilayer film comprising: (a) at least one print layer (102); (b) at least one tie layer (104); (c) at least one second tie layer (108); and (d) at least one sealant layer (110), wherein the multilayer film comprises at least one polyethylene having a weight percentage in the range of 80 - 95 % with respect to the multilayer film, and a density in the range of 0.941 - 0.99 gm/cm³.

In another embodiment of the present disclosure, there is provided a multilayer film comprising: (a) at least one print layer comprising the at least one polyethylene; (b) at least one tie layer comprising the at least one polyethylene; (c) at least one second tie layer comprising the at least one polyethylene; and (d) at least one sealant layer comprising the at least one polyethylene, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film as described herein, wherein the multilayer film comprises the at least one polyethylene having a density in the range of 0.945 - 0.99 gm/cm³.

**In** an embodiment of the present disclosure, there is provided a multilayer film as described herein, wherein the at least one polyethylene has a melt flow index in the range of 0.4 to 7.0 g/10 minutes.

**In** an embodiment of the present disclosure, there is provided a multilayer film as described herein, wherein the multilayer film has a thickness in the range of 170 µm - 400 µm. In one another embodiment of the present disclosure, the multilayer film has a thickness of 220 µm. In yet another embodiment of the present disclosure, the multilayer film has a thickness of 250 µm. In one another embodiment of the present disclosure, the multilayer film has a thickness of 300 µm. In yet another embodiment of the present disclosure, the multilayer film has a thickness of 350 µm. In one another embodiment of the present disclosure, the multilayer film has a thickness of 390 µm. The multilayer film according to the present invention has a thickness in the range of 220 µm to 390 µm.

In an embodiment of the present disclosure, there is provided a multilayer film as described herein, wherein the multilayer film further comprises at least one barrier layer (106) between the at least one tie layer (104) and the at least one second tie layer (108).

In an embodiment of the present disclosure, there is provided a multilayer film as described herein, wherein the at least one print layer (102) comprises: (a) a first layer (202) comprising the at least one polyethylene; (b) a second layer (204) comprising the at least one polyethylene; and (c) a third layer (206) comprising the at least one polyethylene, wherein the first layer to the second layer thickness ratio is in the range of 1:1 to 1:4, the first layer to the third layer thickness ratio is in the range of 1:1 to 1:2, the second layer is in contact with the first layer (202) and the third layer (206), the first layer is in contact with the at least one tie layer. In one another embodiment of the present disclosure, the first layer to the second layer thickness ratio is in the range of 1:1 to 1:3, the first layer to the third layer thickness ratio is in the range of 1:1 to 1:1.5. In yet another embodiment of the present disclosure, the first layer to the second layer thickness ratio is 1:2, the first layer to the third layer thickness ratio is 1:1.

In an embodiment of the present disclosure, there is provided a multilayer film as described herein, wherein the second layer (204) and the third layer (206) independently comprises at least one colorant master batch (MB).

In an embodiment of the present disclosure, there is provided a multilayer film as described herein, wherein the second layer (204) and the third layer (206) independently comprises at least one colorant master batch comprising at least one pigment selected from the group consisting of titanium dioxide (TiO₂), zinc sulphide (ZnS₂), zinc oxide (ZnO), barium sulfate (BaSO₄), and calcium carbonate (CaCO₃). In another embodiment of the present disclosure, the second layer (204) comprises a white colorant master batch made from titanium dioxide (TiO₂).

In an embodiment of the present disclosure, there is provided a multilayer film as described herein, wherein the at least one print layer (102) has a thickness in the range of 50 µm - 200 µm. In one another embodiment of the present disclosure, the at least one print layer (102) has a thickness in the range of 100 µm - 170 µm. In yet another embodiment of the present disclosure, the at least one print layer (102) has a thickness of 110 µm. In one another embodiment of the present disclosure, the at least one print layer (102) has a thickness of 140 µm. In yet another embodiment of the present disclosure, the at least one print layer (102) has a thickness of 150 µm.

In an embodiment of the present disclosure, there is provided a multilayer film as described herein, wherein the at least one tie layer (104) and the at least one second tie layer (108) independently has a thickness in the range of 15 µm - 40 µm. In one another embodiment of the present disclosure, the at least one tie layer (104) and the at least one second tie layer (108) independently has a thickness in the range of 17 µm - 30 µm. In yet another embodiment of the present disclosure, the at least one tie layer (104) and the at least one second tie layer (108) independently has a thickness in the range of 19 µm - 25 µm. In one another embodiment of the present disclosure, the at least one tie layer (104) and the at least one second tie layer (108) independently has a thickness of 20 µm.

In an embodiment of the present disclosure, there is provided a multilayer film as described herein, wherein the at least one tie layer (104) and the at least one second tie layer (108) independently comprises the at least one polyethylene.

In an embodiment of the present disclosure, there is provided a multilayer film as described herein, wherein the at least one barrier layer (106) comprises 3 - 11 layers and has a thickness in the range of 50 µm - 150 µm. In another embodiment of the present disclosure, the at least one barrier layer (106) comprises 4 - 7 layers and has a thickness in the range of 50 µm - 70 µm. In yet another embodiment of the present disclosure, the at least one barrier layer (106) comprises 4 - 7 layers and has a thickness of 50 µm.

In an embodiment of the present disclosure, there is provided a multilayer film as described herein, wherein the at least one barrier layer (106) comprises EVOH having a weight percentage in the range of 1-10 % with respect to the multilayer film.

In an embodiment of the present disclosure, there is provided a multilayer film as described herein, wherein the at least one sealant layer (110) comprises 1 - 3 layers and has a thickness in the range of 50 µm - 150 µm. In another embodiment of the present disclosure, the at least one sealant layer (110) comprises 1 - 3 layers and has a thickness in the range of 60 µm - 120 µm. In yet another embodiment of the present disclosure, the at least one sealant layer (110) comprises 1 - 3 layers and has a thickness of 50 µm. In one another embodiment of the present disclosure, the at least one sealant layer (110) comprises 1 - 3 layers and has a thickness of 70 µm. In yet another embodiment of the present disclosure, the at least one sealant layer (110) comprises 1 - 3 layers and has a thickness of 110 µm.

In an embodiment of the present disclosure, there is provided a multilayer film as described herein, wherein the at least one sealant layer (110) comprises the at least one polyethylene.

In an embodiment of the present disclosure, there is provided a multilayer film as described herein, wherein the at least one sealant layer (110) comprises: (a) a primary layer (302) comprising the at least one polyethylene; (b) a secondary layer (304) comprising the at least one polyethylene; and (c) a tertiary layer (306) comprising the at least one polyethylene, wherein the primary layer (302) to the secondary layer (304) thickness ratio is in the range of 1:1 to 1:4, the primary layer (302) to the tertiary layer (306) thickness ratio is in the range of 1:1 to 1:2, the secondary layer (304) is in contact with the primary layer (302) and the tertiary layer (306), the primary layer (302) is in contact with the at least one second tie layer (108). In another embodiment of the present disclosure the primary layer (302) to the secondary layer (304) thickness ratio is in the range of 1:1 to 1:3, the primary layer (302) to the tertiary layer (306) thickness ratio is in the range of 1:1 to 1:1.5. In yet another embodiment of the present disclosure the primary layer (302) to the secondary layer (304) thickness ratio is 1:2, the primary layer (302) to the tertiary layer (306) thickness ratio is 1:1.

In an embodiment of the present disclosure, there is provided a multilayer film comprising: (a) at least one print layer (102) comprising: (1) a first layer (202) comprising the at least one polyethylene; (2) a second layer (204) comprising the at least one polyethylene; and (3) a third layer (206) comprising the at least one polyethylene, wherein the second layer (204) is in contact with the first layer (202) and the third layer (206), the first layer (202) is in contact with the at least one tie layer (104); (b) at least one tie layer (104) comprising the at least one polyethylene; (c) at least one second tie layer (108) comprising the at least one polyethylene; and (d) at least one sealant layer (110) comprising: (i) a primary layer (302) comprising the at least one polyethylene; (ii) a secondary layer (304) comprising the at least one polyethylene; and (iii) a tertiary layer (306) comprising the at least one polyethylene, wherein the secondary layer (304) is in contact with the primary layer (302) and the tertiary layer (306), the primary layer (302) is in contact with the at least one second tie layer (108), wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film comprising: (a) at least one print layer (102) comprising the at least one polyethylene; (b) at least one tie layer (104) comprising the at least one polyethylene; (c) at least one second tie layer (108) comprising the at least one polyethylene; (d) at least one sealant layer (110) comprising the at least one polyethylene; and (e) a barrier layer (106) between the at least one tie layer (104) and the at least one second tie layer (108), wherein the at least one polyethylene content is 80 - 95 % with respect to the multilayer film, and the density of the at least one polyethylene is in the range of 0.941 -0.99 gm/cm³.

In an embodiment of the present disclosure, there is provided a multilayer film comprising: (a) at least one print layer (102) comprising: (1) a first layer (202) comprising a combination of HDPE and MDPE; (2) a second layer (204) comprising a combination of HDPE and MDPE; and (3) a third layer (206) comprising a combination of HDPE and MDPE, wherein the second layer (204) is in contact with the first layer (202) and the third layer (206), the first layer (202) is in contact with the at least one tie layer (104); (b) at least one tie layer (104) comprising LDPE; (c) at least one second tie layer (108) comprising LDPE; (d) at least one sealant layer (110) comprising: (i) a primary layer (302) comprising a combination of HDPE and MDPE; (ii) a secondary layer (304) comprising a combination of HDPE and MDPE; and (iii) a tertiary layer (306) comprising a combination of HDPE and MDPE, wherein the primary layer (302) to the secondary layer (304) thickness ratio is 1:2, the primary layer (302) to the tertiary layer (306) thickness ratio is 1:1, the secondary layer (304) is in contact with the primary layer (302) and the tertiary layer (306), the primary layer (302) is in contact with the at least one second tie layer (108); and (e) a barrier layer (106) between the at least one tie layer (104) and the at least one second tie layer (108) comprising: (1) a first barrier layer comprising a combination of HDPE and MDPE; (2) an outer tie layer comprising maleic anhydride grafted LLDPE; (3) an EVOH barrier layer; (4) an inner tie layer comprising maleic anhydride grafted LLDPE; and (5) a second barrier layer comprising a combination of HDPE and MDPE, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film having a thickness in the range of 170 µm - 400 µm comprising: (a) at least one print layer (102) having a thickness in the range of 50 µm - 200 µm comprising: (1) a first layer (202) comprising the at least one polyethylene; (2) a second layer (204) comprising the at least one polyethylene and optionally comprising a colorant master batch; and (3) a third layer (206) comprising the at least one polyethylene, wherein the first layer to the second layer thickness ratio is in the range of 1:1 to 1:4, the first layer to the third layer thickness ratio is in the range of 1:1 to 1:2, the second layer is in contact with the first layer (202) and the third layer (206), the first layer is in contact with the at least one tie layer; (b) at least one tie layer (104) having a thickness in the range of 15 µm - 40 µm comprising the at least one polyethylene; (c) at least one second tie layer (108) having a thickness in the range of 15 µm - 40 µm comprising the at least one polyethylene; (d) at least one sealant layer (110) having a thickness in the range of 50 µm - 150 µm comprises 1-3 layers comprising: (i) a primary layer (302) comprising the at least one polyethylene; (ii) a secondary layer (304) comprising the at least one polyethylene; (iii) a tertiary layer (306) comprising the at least one polyethylene, wherein the primary layer (302) to the secondary layer (304) thickness ratio is in the range of 1:1 to 1:4, the primary layer (302) to the tertiary layer (306) thickness ratio is in the range of 1:1 to 1:2, the secondary layer (304) is in contact with the primary layer (302) and the tertiary layer (306), the primary layer (302) is in contact with the at least one second tie layer (108); and (e) a barrier layer (106) between the at least one tie layer (104) and the at least one second tie layer (108) having a thickness in the range of 50 µm - 150 µm comprises 3 - 11 layers comprising EVOH having a weight percentage in the range of 1-10 % with respect to the multilayer film, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film having a total thickness of 250 µm comprising: (a) at least one print layer (102) comprising 3-layers having a total thickness of 110 µm, wherein the at least one print layer comprises: (1) a first layer (202) comprising a combination of HDPE and MDPE; (2) a second layer (204) comprising a combination of HDPE, MDPE, and 10% white colorant master batch; and (3) a third layer (206) comprising a combination of HDPE and MDPE, wherein the second layer (204) is in contact with the first layer (202) and the third layer (206), the first layer (202) is in contact with the at least one tie layer (104); (b) at least one tie layer (104) comprising LDPE having a total thickness of 20 µm; (c) at least one second tie layer (108) comprising LDPE having a total thickness of 20 µm; (d) at least one sealant layer (110) comprising 3-layers having a total thickness of 50 µm, wherein the at least one sealant layer comprises: (i) a primary layer (302) comprising a combination of HDPE and MDPE; (ii) a secondary layer (304) comprising a combination of HDPE and MDPE; and (iii) a tertiary layer (306) comprising a combination of HDPE and MDPE, wherein the primary layer (302) to the secondary layer (304) thickness ratio is 1:2, the primary layer (302) to the tertiary layer (306) thickness ratio is 1:1, the secondary layer (304) is in contact with the primary layer (302) and the tertiary layer (306), the primary layer (302) is in contact with the at least one second tie layer (108); and (e) a barrier layer (106) between the at least one tie layer (104) and the at least one second tie layer (108) comprising 5-layers having a total thickness of 50 µm, wherein barrier layer comprises: (1) a first barrier layer comprising a combination of HDPE and MDPE having a total thickness of 10 µm; (2) an outer tie layer comprising maleic anhydride grafted LLDPE having a total thickness of 7.5 µm; (3) an EVOH barrier layer having a thickness of 15 µm; (4) an inner tie layer comprising maleic anhydride grafted LLDPE having a total thickness of 7.5 µm; and (5) a second barrier layer comprising a combination of HDPE and MDPE having a total thickness of 10 µm, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film having a total thickness of 300 µm comprising: (a) at least one print layer (102) comprising 3-layers having a total thickness of 140 µm, wherein the at least one print layer comprises: (1) a first layer (202) comprising a combination of HDPE and MDPE; (2) a second layer (204) comprising a combination of HDPE, MDPE, and 10% white colorant master batch; and (3) a third layer (206) comprising a combination of HDPE and MDPE, wherein the second layer (204) is in contact with the first layer (202) and the third layer (206), the first layer (202) is in contact with the at least one tie layer (104); (b) at least one tie layer (104) comprising LDPE having a total thickness of 20 µm; (c) at least one second tie layer (108) comprising LDPE having a total thickness of 20 µm; (d) at least one sealant layer (110) comprising 3-layers having a total thickness of 70 µm, wherein the at least one sealant layer comprises: (i) a primary layer (302) comprising a combination of HDPE and MDPE; (ii) a secondary layer (304) comprising a combination of HDPE and MDPE; and (iii) a tertiary layer (306) comprising a combination of HDPE and MDPE, wherein the primary layer (302) to the secondary layer (304) thickness ratio is 1:2, the primary layer (302) to the tertiary layer (306) thickness ratio is 1:1, the secondary layer (304) is in contact with the primary layer (302) and the tertiary layer (306), the primary layer (302) is in contact with the at least one second tie layer (108); and (e) a barrier layer (106) between the at least one tie layer (104) and the at least one second tie layer (108) comprising 5-layers having a total thickness of 50 µm, wherein barrier layer comprises: (1) a first barrier layer comprising a combination of HDPE and MDPE having a total thickness of 10 µm; (2) an outer tie layer comprising maleic anhydride grafted LLDPE having a total thickness of 7.5 µm; (3) an EVOH barrier layer having a thickness of 15 µm; (4) an inner tie layer comprising maleic anhydride grafted LLDPE having a total thickness of 7.5 µm; and (5) a second barrier layer comprising a combination of HDPE and MDPE having a total thickness of 10 µm, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a multilayer film having a total thickness of 350 µm comprising: (a) at least one print layer (102) comprising 3-layers having a total thickness of 150 µm, wherein the at least one print layer comprises: (1) a first layer (202) comprising a combination of HDPE and MDPE; (2) a second layer (204) comprising a combination of HDPE, MDPE, and 10% white colorant master batch; and (3) a third layer (206) comprising a combination of HDPE and MDPE, wherein the second layer (204) is in contact with the first layer (202) and the third layer (206), the first layer (202) is in contact with the at least one tie layer (104); (b) at least one tie layer (104) comprising LDPE having a total thickness of 20 µm; (c) at least one second tie layer (108) comprising LDPE having a total thickness of 20 µm; (d) at least one sealant layer (110) comprising 3-layers having a total thickness of 110 µm, wherein the at least one sealant layer comprises: (i) a primary layer (302) comprising a combination of HDPE and MDPE; (ii) a secondary layer (304) comprising a combination of HDPE and MDPE; and (iii) a tertiary layer (306) comprising a combination of HDPE and MDPE, wherein the primary layer (302) to the secondary layer (304) thickness ratio is 1:2, the primary layer (302) to the tertiary layer (306) thickness ratio is 1:1, the secondary layer (304) is in contact with the primary layer (302) and the tertiary layer (306), the primary layer (302) is in contact with the at least one second tie layer (108); and (e) a barrier layer (106) between the at least one tie layer (104) and the at least one second tie layer (108) comprising 5-layers having a total thickness of 50 µm, wherein barrier layer comprises: (1) a first barrier layer comprising a combination of HDPE and MDPE having a total thickness of 10 µm; (2) an outer tie layer comprising maleic anhydride grafted LLDPE having a total thickness of 7.5 µm; (3) an EVOH barrier layer having a thickness of 15 µm; (4) an inner tie layer comprising maleic anhydride grafted LLDPE having a total thickness of 7.5 µm; and (5) a second barrier layer comprising a combination of HDPE and MDPE having a total thickness of 10 µm, wherein the at least one polyethylene content is 80 - 95 % with respect to the multilayer film, and the density of the at least one polyethylene is in the range of 0.941 - 0.99 gm/cm³.

In an embodiment of the present disclosure, there is provided a process of manufacturing the multilayer film as described herein, the process comprising: (a) extrusion laminating the at least one barrier layer, the at least one sealant layer, and the at least one second tie layer to obtain a sheet; and (b) extrusion laminating the sheet, the at least one print layer, and the at least one tie layer to obtain the multilayer film.

In another embodiment of the present disclosure, there is provided an alternate process of manufacturing multilayer film wherein polymers such as medium density polyethylene (MDPE), high density polyethylene (HDPE), low density polyethylene (LDPE), linear low density polyethyelene with appropriate MFI (melt flow index), density and ratio are run through 3 layers blown or cast film making process. Layer ratio of the three layers film range between 1:1:1 to 1:4:1. Both outer print film and sealant film have been made in this process. Thicknesses of these films are kept between 50 and 150 µm, premade multilayer outer film is mounted on the main unwinder of the laminating machine. Through various idle rollers, film reaches to the first lamination head and to NIP junction (combination of chill roll and rubberized nip roll), at least one tie layer as bond or tie between print layer and the barrier layer, with the rubberized nip pressure of 20 to 40 pound per linear inch, co-extruded hot polymer melt spread uniformly and help uniform bond strength between print layer and the barrier layer. By exchanging heat with the chill roll, three-layer film gets cool down to ambient temperature, Similarly, the sealant with the at least one second tie layer is extrusion laminated with the barrier layer. Polymer composition for tie layer or the second tie layer is extrusion low density polyethylene. With the nip pressure, all the sub assembled layers, get bonded, by exchanging heat with the chill roll, composite multilayer film gets cool down to ambient temperature, composite multilayer film thus made is cured at ambient temperature for 72 hours before secondary operation such as slitting, printing and tubing.

### Abbreviations:

MD: machine direction;
TD: Transverse direction;
MPa denotes mega-pascal;
µm denotes micrometer;
mg denotes milligram

### EXAMPLES

The disclosure will now be illustrated with working examples, which is intended to illustrate the working of disclosure and not intended to take restrictively to imply any limitations on the scope of the present disclosure. Unless defined otherwise, all technical and scientific terms used herein have the same meaning as commonly understood to one of ordinary skill in the art to which this disclosure belongs. It is to be understood that this disclosure is not limited to particular methods, and experimental conditions described, as such methods and conditions may apply.

### EXAMPLE 1

### Process for preparing a multilayer film

The multilayer film of the present disclosure is prepared by blown film extrusion, wherein all the layers are prepared by blown film extrusion and then are extrusion laminated to form the multilayer film. The process for preparing a multilayer film of the present disclosure comprises extrusion laminating the at least one barrier layer, the at least one sealant layer, and the at least one second tie layer to obtain a sheet; and extrusion laminating the sheet, the at least one print layer and the at least one tie layer to obtain the multilayer film.

### EXAMPLE 2

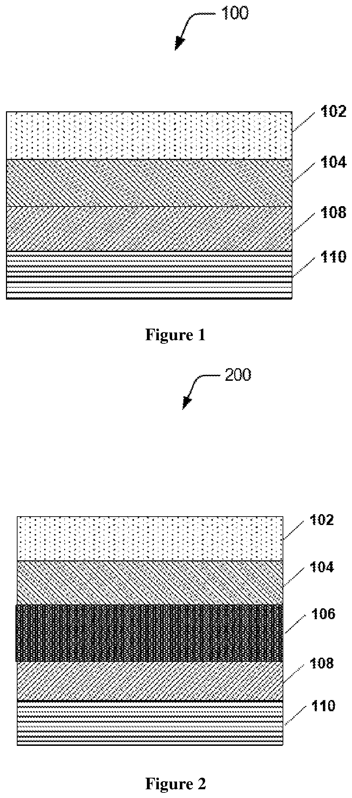

In an example, the multilayer film is as represented in the Figure 1. The cross-section of the multilayer film 100 from outside to inside comprises at least one print layer (102), at least one tie layer (104), at least one second tie layer (108), and at least one sealant layer (110). The multilayer film of the Figure 1 comprises at least one polyethylene having a weight percentage in the range of 80 - 95 % with respect to the multilayer film, and a density in the range of 0.941 - 0.99 gm/cm³. In an example, the thickness of the at least one print layer (102) is 150 µm. In another example the at least one print layer comprises at least one colorant master batch. In an example, the at least one tie layer has a thickness 30 µm. In an example, the at least one tie layer (104) is made up of extrusion polyethylene. In an example, the at least one second tie layer (108) is same or different from the at least one tie layer. In an example, the at least one second tie layer has a thickness 30 µm. In an example the at least one sealant layer (110) comprises at least one polyethylene and has a thickness 84 µm.

### EXAMPLE 3

Figure 2 differs from the Figure 1 only in that the multilayer film (200) further comprises at least one barrier layer (106). In an example, the multilayer film comprising a barrier layer (200) is represented in the Figure 2. The multilayer film of the Example 1 further comprises at least one barrier layer (106) to form the multilayer film of Figure 2. The at least one barrier layer (106) is present between the at least one tie layer (104) and the at least one second tie layer (108). In an example, the at least one barrier layer is a 3-layer structure and has a thickness in the range of 50 - 150 µm. In another example, the at least one barrier layer is a 5-layer structure and has a thickness in the range of 50 -150 µm. In one another example, the at least one barrier layer is a 7-layer structure and has a thickness in the range of 50 -150 µm. In yet another example, the at least one barrier layer is a 9-layer structure and has a thickness in the range of 50 -150 µm. In one another example, the at least one barrier layer is a 11-layer structure and has a thickness in the range of 50 -150 µm.

In another example, the at least one barrier layer is an EVOH barrier layer having a thickness of 125 µm. In yet another example, the at least one barrier layer is a 7-layer EVOH barrier layer with layers from outer to inner side are layer 1, layer 2, layer 3, layer 4, layer 5, layer 6, and layer 7. The layer 1 of the barrier layer is in contact with the at least one tie layer (104), and the layer 7 is in contact with the at least second tie layer (108).

### EXAMPLE 4

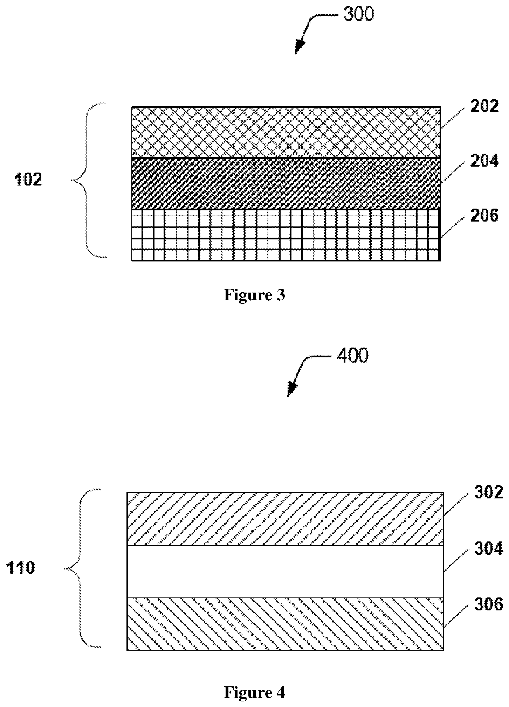

In an example the at least one print layer (102) is illustrated in Figure 3 (300). The at least one print layer is a 3-layer structure. The at least one print layer comprises a first layer (202) having a thickness of 30 µm, a second layer (204) having a thickness of 90 µm, a third layer (206) having a thickness of 30 µm. The second layer (204) may optionally comprise at least one colorant master batch. The weight percentage of the colorant master batch in the second layer may be in the range of 1-10% with respect to the at least one print layer. In an example, the third layer (206) may optionally comprise at least one colorant master batch. The weight percentage of the colorant master batch in the third layer may be in the range of 1-10% with respect to the at least one print layer. The first layer, second layer, and third layer comprise the at least one polyethylene having a density in the range of 0.941 - 0.99 gm/cm³. In another example, the first layer (202) is in contact with the at least one tie layer comprising the at least one polyethylene. The at least one print layer is prepared by blown film extrusion.

### EXAMPLE 5

In an example the at least one sealant layer (110) is illustrated in Figure 4 (400). The at least one sealant layer is a 3-layer structure. The at least one sealant layer comprises a primary layer (302) having a thickness of 30 µm, a secondary layer (304) having a thickness of 90 µm, a tertiary layer (306) having a thickness of 30 µm. The primary layer, secondary layer, and the tertiary layer comprise the at least one polyethylene having a density in the range of 0.941 - 0.99 gm/cm³. In an example, the primary layer (302) is in contact with the at least one second tie layer (108) comprising the at least one polyethylene. The at least one sealant layer is prepared by blown film extrusion.

### EXAMPLE 6

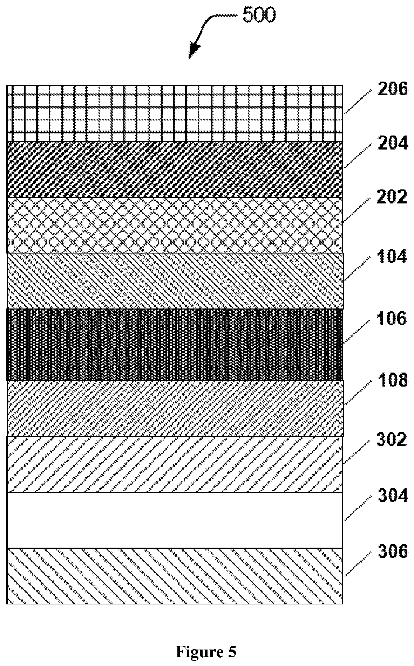

Figure 5 illustrates a cross-section of a multilayer film (500). The multilayer film as illustrated in the Figure 5 discloses a layered structure from outside to inside comprising at least one print layer, at least one tie layer, at least one barrier layer, at least one second tie layer, and at least one sealant layer. Multilayer films having thickness of 250 µm, 300 µm, and 350 µm were prepared.

In an example, the multilayer film having thickness of 250 µm comprises a print layer, wherein the print layer is a 3-layer structure. The print layer comprises a first layer comprising 30% HDPE and 70% MDPE, a second layer comprising 60% HDPE and 30% MDPE, and a third layer comprising 30% HDPE and 70% MDPE. The second layer also comprises colorant master batch. The weight percentage of the colorant master batch in the second layer is 10% with respect to the at least one print layer. The ratio of thickness of the first layer, second layer and third layer is 1:2:1 and the total thickness of the print layer is 110 µm. The first layer is in contact with the 20 µm thick tie layer comprising 100% LDPE by extrusion lamination. The multilayer layer film further comprises a 3-layer structure sealant layer. The sealant layer comprises a primary layer (302) comprising 30% HDPE and 70% MDPE, a secondary layer (304) comprising 70% HDPE and 30% MDPE, and a tertiary layer (306) comprising 30% HDPE and 70% MDPE. The ratio of thickness of the primary layer, secondary layer, and tertiary layer is 1:2:1 and the total thickness of the sealant layer is 50 µm. The primary layer is in contact with the 20 µm thick second tie layer comprising 100% LDPE by extrusion lamination. The multilayer film further comprises a barrier layer between the tie layer and the second tie layer. The barrier layer is a 5-layer EVOH barrier layer which comprises a 10 µm thick first barrier layer comprising 30% HDPE and 70% MDPE, a 7.5 µm thick outer and inner tie layer made from maleic anhydride grafted LLDPE, a 15 µm thick EVOH barrier layer, and a 10 µm thick second barrier layer comprising 30% HDPE and 70% MDPE, wherein the outer tie layer is positioned between the first barrier layer and the EVOH layer and the inner tie layer is positioned between the second barrier layer and the EVOH barrier layer. The first barrier layer is in contact with the tie layer and the second barrier layer is in contact with the second tie layer.

In further examples, multilayer film having thickness 300 µm and 350 µm were prepared, having the same structure as described above, but with varied thickness of the print layer and the sealant layer. In the multilayer film having thickness 300 µm, the print layer had a thickness of 140 µm and the sealant layer had a thickness of 70 µm. In the multilayer film having thickness 350 µm, the print layer had a thickness of 150 µm and the sealant layer had a thickness of 110 µm. Similar to above, multilayer films having thickness 220 µm and 390 µm were prepared.

### EXAMPLE 8

### Mechanical properties

The multilayer film of the present disclosure was used to make lamitubes having length 115mm. Mechanical properties of the prepared lamitubes including stiffness and young's modulus were tested and the obtained results are recorded in the Table 1 below.

The multilayer films of thickness 220 µm, 250 µm, 350 µm and 350 µm were used to make lamitube samples 1, 2, 3, and 4 respectively. A 350 µm thick comparative film was also prepared having the below given structure. The stiffness test was conducted by following the standard procedure (TAPPI T556 standard method). The young's modulus and stiffness results are elaborated in Table 1 below. MD denotes machine direction and TD denotes transverse direction. MB (10%) denotes titanium dioxide master batch.

### Structure of the comparative film:

**Top layer (3-layer film); Thickness: 150 µm;**
   Layer 1 [LLDPE (100%)]; 30 µm
   Layer 2 [LDPE (70%) + LLDPE (15%) + MB (15 %)]; 90 µm
   Layer 3 [LLDPE (100%)]; 30 µm
**First adhesive layer; Thickness: 30 µm;**
   [HDPE (0%) + LDPE (100%)]; 30 µm
**Heat sealable blocking layer; Thickness: 55 µm;**
   Layer 1 [LLDPE (100%)]
   Layer 2 [LLDPE based tie layer]
   Layer 3 [EVOH]
   Layer 4 [EVOH]
   Layer 5 [EVOH or tie layer]
   Layer 6 [LLDPE based tie layer]
   Layer 7 [LLDPE (100%)]
**Second adhesive layer; Thickness: 30 µm;**
   [HDPE (0%) + LDPE (100%)]; 30 µm
**Sealant layer (3-layer film); Thickness: 85 µm;**
   Layer 1 [LLDPE (100%)]; 17 µm
   Layer 2 [LDPE (75%) + LLDPE (15%) + MB (15 %)]; 51 µm
   Layer 3 [LLDPE (100%)]; 17 µm

**Table 1**

| S.No. | **Thickness (µm)** | **Stiffness (mg)** | | **Young's Modulus (MPa)** | |
|---|---|---|---|---|---|
| Samples | | **MD** | **TD** | **MD** | **TD** |
| 1 | **220** | 254 | 270 | 725 | 770 |
| 2 | **250** | 369 | 407 | 824 | 830 |
| 3 | **350** | 781 | 860 | 679 | 717 |
| 4 | **390** | 944 | 950 | 697 | 711 |
| Comparative film 5 | **350** | 612 | 700 | 499 | 535 |

It is clear from the Table 1 that the resin selection and orientation method are the primary variables that influence tensile values and thereby the stiffness of the multilayer film.

Young's modulus is synonymous with tensile modulus, a material property defined as the stress-strain ratio of the initial portion of a load extension curve. For instance, on comparison of the similar thickness samples, i.e, the sample 3 of the present disclosure in Table 1 showed much higher stiffness and young's modulus in comparison to the comparative film having the same thickness. A higher modulus value suggested that the multilayer films of the present disclosure are stiffer and have more resistance to elongation in use. Moreover, the data showed that despite the thickness being on lower sides, i.e., within the range of 220 - 390 µm, the property of stiffness was not compromised.

### Advantages of the present disclosure:

The above-mentioned implementation examples as described on this subject matter and its equivalent thereof have many advantages, including those which are described.

The multilayer film of the present disclosure comprising four or more layers provides advantageous attributes, such as, good stiffness, resilience, and bounce back. The presence of at least one polyethylene having a density in the range of 0.941 - 0.99 gm /cm³ in a high weight percentage with respect to the multilayer film, i.e., in the range of 80 - 95 %, enables source reduction, i.e., reduction of film thickness without affecting the functionalities of the multilayer film such as, stability, stiffness, etc. The stiffness of the multilayer film of the present disclosure with thickness in the range of 170 µm - 400 µm was higher by almost 15-30% as compared to the commercial multilayer film of the same thickness. The design of the multilayer film enhances economic value compared to commercial films and helps in achieving greater sustainability in terms of multilayer film design with lesser film thickness yet higher stiffness and bounce back.

Although the subject matter has been described in considerable detail with reference to certain examples and implementations thereof, other implementations are possible. As such, the scope of the appended claims should not be limited to the description of the preferred examples and implementations contained therein.

## Claims

1. A multilayer film for a lamitube comprising:
(a) at least one print layer (102);
(b) at least one tie layer (104);
(c) at least one second tie layer (108);
(d) at least one sealant layer (110), and
further comprises at least one barrier layer (106) between the at least one tie layer (104) and the at least one second tie layer (108),
wherein the at least one barrier layer comprises EVOH,
wherein the multilayer film comprises at least one polyethylene having a weight percentage in the range of 80 - 95 % with respect to the multilayer film, and a density in the range of 0.941 - 0.99 gm/cm³,
wherein the multilayer film has a thickness in the range of 220 µm - 390 µm.

2. The multilayer film as claimed in claim 1, wherein the at least one polyethylene has a density is in the range of 0.945 - 0.97 gm/cm³.

3. The multilayer film as claimed in claim 1, wherein the at least one polyethylene has a melt flow index in the range of 0.4 to 7.0 g/10 minutes.

4. The multilayer film as claimed in claim 1, wherein the at least one print layer (102) comprises:
(a) a first layer (202) comprising the at least one polyethylene;
(b) a second layer (204) comprising the at least one polyethylene; and
(c) a third layer (206) comprising the at least one polyethylene,
wherein the first layer to the second layer thickness ratio is in the range of 1:1 to 1:4, the first layer to the third layer thickness ratio is in the range of 1:1 to 1:2, the second layer is in contact with the first layer (202) and the third layer (206), and the first layer is in contact with the at least one tie layer.

5. The multilayer film as claimed in claim 4, wherein the second layer (204) and the third layer (206) independently comprises at least one colorant master batch; wherein the at least one colorant master batch comprises at least one pigment selected from the group consisting of titanium dioxide (TiO₂), zinc sulphide (ZnS₂), zinc oxide (ZnO), barium sulfate (BaSO₄), and calcium carbonate (CaCO₃).

6. The multilayer film as claimed in claim 1, wherein the at least one print layer (102) has a thickness in the range of 50 µm - 200 µm.

7. The multilayer film as claimed in claim 1, wherein the at least one tie layer (104) and the at least one second tie layer (108) independently has a thickness in the range of 15 µm - 40 µm,;
and independently comprises the at least one polyethylene.

8. The multilayer film as claimed in claim 1, wherein the at least one barrier layer (106) comprises 3 - 11 layers and has a thickness in the range of 50 µm - 150 µm.

9. The multilayer film as claimed in claim 1, wherein the at least one barrier layer (106) comprises EVOH having a weight percentage in the range of 1-10 % with respect to the multilayer film.

10. The multilayer film as claimed in claim 1, wherein the at least one sealant layer (110) comprises 1 - 3 layers and has a thickness in the range of 50 µm - 150 µm.

11. The multilayer film as claimed in claim 10, wherein the at least one sealant layer (110) comprises the at least one polyethylene.

12. The multilayer film as claimed in claim 10, wherein the at least one sealant layer (110) comprises:
(a) a primary layer (302) comprising the at least one polyethylene;
(b) a secondary layer (304) comprising the at least one polyethylene; and
(c) a tertiary layer (306) comprising the at least one polyethylene,
wherein the primary layer (302) to the secondary layer (304) thickness ratio is in the range of 1:1 to 1:4, the primary layer (302) to the tertiary layer (306) thickness ratio is in the range of 1:1 to 1:2, the secondary layer (304) is in contact with the primary layer (302) and the tertiary layer (306), the primary layer (302) is in contact with the at least one second tie layer (108).

13. A process of manufacturing the multilayer film as claimed in any one of the claims 1-12, the process comprising:
(a) extrusion laminating the at least one barrier layer, the at least one sealant layer, and the at least one second tie layer to obtain a sheet; and
(b) extrusion laminating the sheet, the at least one print layer, and the at least one tie layer to obtain the multilayer film.

## Patentansprüche

1. Mehrschichtfolie für ein Laminatrohr, umfassend:
(a) mindestens eine Druckschicht (102);
(b) mindestens eine Haftvermittlerschicht (104);
(c) mindestens eine zweite Haftvermittlerschicht (108);
(d) mindestens eine Dichtungsschicht (110), und
ferner mindestens eine Barriereschicht (106) zwischen der mindestens einen Haftvermittlerschicht (104) und der mindestens einen zweiten Haftvermittlerschicht (108) umfasst,
wobei die mindestens eine Barriereschicht EVOH umfasst,
wobei die Mehrschichtfolie mindestens ein Polyethylen mit einem Massenanteil im Bereich von 80 - 95 %, bezogen auf die Mehrschichtfolie, und einer Dichte im Bereich von 0,941 - 0,99 gm/cm³ umfasst,
wobei die Mehrschichtfolie eine Dicke im Bereich von 220 µm - 390 µm aufweist.

2. Mehrschichtfolie nach Anspruch 1, wobei das mindestens eine Polyethylen eine Dichte im Bereich von 0,945 - 0,97 gm/cm³ aufweist.

3. Mehrschichtfolie nach Anspruch 1, wobei das mindestens eine Polyethylen einen Schmelzflussindex im Bereich von 0,4 bis 7,0 g/10 Minuten aufweist.

4. Mehrschichtfolie nach Anspruch 1, wobei die mindestens eine Druckschicht (102) umfasst:
(a) eine erste Schicht (202), die das mindestens eine Polyethylen umfasst;
(b) eine zweite Schicht (204), die das mindestens eine Polyethylen umfasst; und
(c) eine dritte Schicht (206), die das mindestens eine Polyethylen umfasst,
wobei das Dickenverhältnis der ersten Schicht zur zweiten Schicht im Bereich von 1:1 bis 1:4 liegt, das Dickenverhältnis der ersten Schicht zur dritten Schicht im Bereich von 1:1 bis 1:2 liegt, die zweite Schicht mit der ersten Schicht (202) und der dritten Schicht (206) in Kontakt steht, und die erste Schicht mit der mindestens einen Haftvermittlerschicht in Kontakt steht.

5. Mehrschichtfolie nach Anspruch 4, wobei die zweite Schicht (204) und die dritte Schicht (206) jeweils mindestens ein Farbmasterbatch umfassen;
wobei das mindestens eine Farbmasterbatch mindestens ein Pigment umfasst, das aus der Gruppe ausgewählt ist, die aus Titandioxid (TiO₂), Zinksulfid (ZnS₂), Zinkoxid (ZnO), Bariumsulfat (BaSO₄) und Calciumcarbonat (CaCO₃) besteht.

6. Mehrschichtfolie nach Anspruch 1, wobei die mindestens eine Druckschicht (102) eine Dicke im Bereich von 50 µm - 200 µm aufweist.

7. Mehrschichtfolie nach Anspruch 1, wobei die mindestens eine Haftvermittlerschicht (104) und die mindestens eine zweite Haftvermittlerschicht (108) jeweils eine Dicke im Bereich von 15 µm - 40 µm aufweisen;
und unabhängig das mindestens eine Polyethylen umfasst.

8. Mehrschichtfolie nach Anspruch 1, wobei die mindestens eine Barriereschicht (106) 3 - 11 Schichten umfasst und eine Dicke im Bereich von 50 µm - 150 µm aufweist.

9. Mehrschichtfolie nach Anspruch 1, wobei die mindestens eine Barriereschicht (106) EVOH mit einem Massenanteil im Bereich von 1-10 %, bezogen auf die Mehrschichtfolie, umfasst.

10. Mehrschichtfolie nach Anspruch 1, wobei die mindestens eine Dichtungsschicht (110) 1 - 3 Schichten umfasst und eine Dicke im Bereich von 50 µm - 150 µm aufweist.

11. Mehrschichtfolie nach Anspruch 10, wobei die mindestens eine Dichtungsschicht (110) das mindestens eine Polyethylen umfasst.

12. Mehrschichtfolie nach Anspruch 10, wobei die mindestens eine Dichtungsschicht (110) Folgendes umfasst:
(a) eine Primärschicht (302), die das mindestens eine Polyethylen umfasst;
(b) eine Sekundärschicht (304), die das mindestens eine Polyethylen umfasst; und
(c) eine Tertiärschicht (306), die das mindestens eine Polyethylen umfasst,
wobei das Dickenverhältnis der Primärschicht (302) zur Sekundärschicht (304) im Bereich von 1:1 bis 1:4 liegt, das Dickenverhältnis der Primärschicht (302) zur Tertiärschicht (306) im Bereich von 1:1 bis 1:2 liegt, die Sekundärschicht (304) mit der Primärschicht (302) und der Tertiärschicht (306) in Kontakt steht, die Primärschicht (302) mit der mindestens einen zweiten Haftvermittlerschicht (108) in Kontakt steht.

13. Verfahren zum Herstellen der Mehrschichtfolie nach einem der Ansprüche 1-12, wobei das Verfahren umfasst:
(a) Extrusionslaminieren der mindestens einen Barriereschicht, der mindestens einen Dichtungsschicht und der mindestens einen zweiten Haftvermittlerschicht, um ein Folienblatt zu erhalten; und
(b) Extrusionslaminieren des Folienblatts, der mindestens einen Druckschicht und der mindestens einen Haftvermittlerschicht, um die Mehrschichtfolie zu erhalten.

## Revendications

1. Film multicouche destiné à un tube laminé, comprenant :
(a) au moins une couche d'impression (102) ;
(b) au moins une couche de liaison (104) ;
(c) au moins une deuxième couche de liaison (108) ;
(d) au moins une couche de scellement (110), et
et comprend en outre au moins une couche barrière (106) située entre l'au moins une couche de liaison (104) et l'au moins une deuxième couche de liaison (108),
dans lequel l'au moins une couche barrière comprend de l'EVOH,
dans lequel le film multicouche comprend au moins un polyéthylène ayant un pourcentage en poids compris entre 80 et 95 % par rapport au film multicouche, et une densité comprise entre 0,941 et 0,99 g/cm³,
dans lequel le film multicouche présente une épaisseur comprise entre 220 µm et 390 µm.

2. Film multicouche selon la revendication 1, dans lequel l'au moins un polyéthylène a une densité comprise entre 0,945 et 0,97 g^{/}cm³.

3. Film multicouche selon la revendication 1, dans lequel l'au moins un polyéthylène a un indice de fluidité à chaud compris entre 0,4 et 7,0 g/10 minutes.

4. Film multicouche selon la revendication 1, dans lequel l'au moins une couche d'impression (102) comprend :
(a) une première couche (202) comprenant l'au moins un polyéthylène ;
(b) une deuxième couche (204) comprenant l'au moins un polyéthylène ; et
(c) une troisième couche (206) comprenant l'au moins un polyéthylène,
dans lequel le rapport d'épaisseur entre la première couche et la deuxième couche est compris entre 1:1 et 1:4, le rapport d'épaisseur entre la première couche et la troisième couche est compris entre 1:1 et 1:2, la deuxième couche est en contact avec la première couche (202) et la troisième couche (206),
et la première couche est en contact avec l'au moins une couche de liaison.

5. Film multicouche selon la revendication 4, dans lequel la deuxième couche (204) et la troisième couche (206) comprennent chacune, indépendamment l'une de l'autre, au moins un mélange-maître de colorants ;
dans lequel l'au moins un mélange-maître de colorants comprend au moins un pigment choisi dans le groupe constitué par le dioxyde de titane (TiO₂), le sulfure de zinc (ZnS₂), l'oxyde de zinc (ZnO), le sulfate de baryum (BaSO₄) et le carbonate de calcium (CaCO₃).

6. Film multicouche selon la revendication 1, dans lequel l'au moins une couche d'impression (102) présente une épaisseur comprise entre 50 µm et 200 µm.

7. Film multicouche selon la revendication 1, dans lequel l'au moins une couche de liaison (104) et l'au moins une deuxième couche de liaison (108) présentent chacune, indépendamment l'une de l'autre, une épaisseur comprise entre 15 µm et 40 µm ; et comprennent chacune, indépendamment l'une de l'autre, le au moins un polyéthylène.

8. Film multicouche selon la revendication 1, dans lequel l'au moins une couche barrière (106) comprend 3 à 11 couches et présente une épaisseur comprise entre 50 µm et 150 µm.

9. Film multicouche selon la revendication 1, dans lequel l'au moins une couche barrière (106) comprend de l'EVOH dont le pourcentage en poids est compris entre 1 et 10 % par rapport au film multicouche.

10. Film multicouche selon la revendication 1, dans lequel l'au moins une couche de scellement (110) comprend 1 à 3 couches et présente une épaisseur comprise entre 50 µm et 150 µm.

11. Film multicouche selon la revendication 10, dans lequel l'au moins une couche de scellement (110) comprend l'au moins un polyéthylène.

12. Film multicouche selon la revendication 10, dans lequel l'au moins une couche de scellement (110) comprend :
(a) une couche primaire (302) comprenant l'au moins un polyéthylène ;
(b) une couche secondaire (304) comprenant l'au moins un polyéthylène ; et
(c) une couche tertiaire (306) comprenant l'au moins un polyéthylène,
dans lequel le rapport d'épaisseur entre la couche primaire (302) et la couche secondaire (304) est compris entre 1:1 et 1:4, le rapport d'épaisseur entre la couche primaire (302) et la couche tertiaire (306) est compris entre 1:1 et 1:2, la couche secondaire (304) est en contact avec la couche primaire (302) et la couche tertiaire (306), la couche primaire (302) est en contact avec l'au moins une deuxième couche de liaison (108).

13. Procédé de fabrication du film multicouche selon l'une quelconque des revendications 1 à 12, le procédé comprenant :
(a) le laminage par extrusion de l'au moins une couche barrière, de la au moins une couche de scellement et de l'au moins une deuxième couche de liaison pour obtenir une feuille ; et
(b) le laminage par extrusion de la feuille, de l'au moins une couche d'impression et de l'au moins une couche de liaison pour obtenir le film multicouche.
